# EUROPEAN PATENT SPECIFICATION

(11) **EP 1 939 918 B1**
(45) Date of publication and mention of the grant of the patent: **31.08.2011**
(21) Application number: 07124077.4
(22) Date of filing: 27.12.2007
(51) Int. Cl.: H01J 9/24

(54) **Method of manufacturing lower panel having barrier ribs for plasma display panel**
Verfahren zur Herstellung einer Unterplatte mit Rippen für eine Plasmaanzeigetafel
Procédé de fabrication de panneau inférieur disposant de nervures de barrière pour panneau d'affichage à plasma

(30) Priority: 29.12.2006 KR 20060138902; 31.05.2007 KR 20070053418
(43) Date of publication of application: 02.07.2008
(73) Proprietor: Samsung SDI Co., Ltd., Suwon-si Gyeonggi-do (KR)
(72) Inventor: Yang, Dong-Yol, Daejeon (KR); Ryu, Seung-Min, Daejeon (KR); Park, Suk-Hee, Daejeon (KR); Choi, Jong-Seo, Gyeonggi-do (KR); Choi, Kwi-Seok, Gyeonggi-do (KR); Lee, Beom-Wook, Gyeonggi-do (KR)
(74) Representative: Hengelhaupt, Jürgen

(56) References cited:
- WO-A-01/52299
- WO-A-2005/068148
- US-A1- 2004 070 342
- US-A1- 2006 043 638

## Description

### BACKGROUND OF THE INVENTION

### 1. Field of the Invention

The present invention relates to a method of manufacturing a lower panel including barrier ribs included in a plasma display panel (PDP).

### 2. Description of the Related Art

A plasma display panel (PDP) is a flat panel display (FPD) in which sustain electrodes and address electrodes are arranged in a matrix formation between an upper substrate and a lower substrate to cause discharge between the electrodes, thus creating ultraviolet (UV) rays which excite phosphor layers, thereby forming a predetermined image.

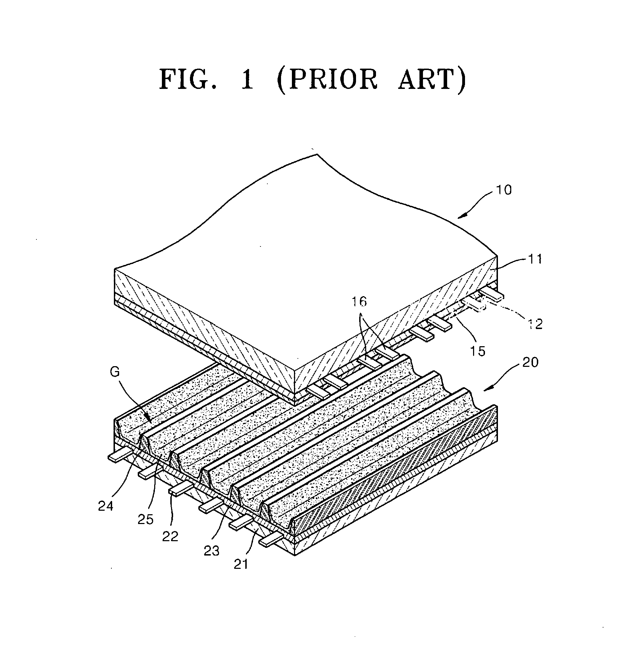

FIG. 1 is an exploded perspective view of a conventional alternating current (AC) surface-discharge-type PDP. Referring to FIG. 1, the conventional AC surface-discharge-type PDP is manufactured by forming an upper panel 10 and a lower panel 20 using separate processes and combining the upper and lower panels 10 and 20 opposite to each other.

In the upper panel 10, an upper dielectric layer 12 and a protection layer 15 are sequentially formed on an upper substrate 11 on which pairs of sustain electrodes 16 are disposed. The upper dielectric layer 12 accumulates wall charges during plasma discharge. The protection layer 15 protects the pairs of sustain electrodes 16 and the upper dielectric layer 12 from gas ion sputtering and improves the emission of secondary electrons during plasma discharge.

In the lower panel 20, a lower dielectric layer 23 is formed on a lower substrate 21 on which a plurality of address electrodes 22 are formed, to bury the address electrodes 22, and a plurality of barrier ribs 24 are disposed on the lower dielectric layer 23. The barrier ribs 24 partition a plurality of discharge spaces G and form independent emission regions. Phosphor layers 25 including red (R), green (G), and blue (B) phosphor layers are coated in the discharge spaces G. The phosphor layers 25 are excited by UV rays, which are emitted during plasma discharge, to generate visible (V) rays, thereby forming a predetermined image. A mixture of inert gases, such as He, Xe, and Ne gases, is injected and sealed in the discharge spaces G at a pressure of 400 to 600 Torr. (53·300 to 80·000 Pa).

Referring to FIG. 1, the barrier ribs 24 may be formed as open stripe type barrier ribs or closed type barrier ribs. When the barrier ribs 24 are formed as closed type barrier ribs, discharge efficiency is higher than when the barrier ribs 24 are formed as open stripe type barrier ribs. The barrier ribs 24 maintain a predetermined distance between the upper and lower substrates 11 and 21 and partition the discharge spaces G. The barrier ribs 24 prevent the occurrence of electrical and optical cross-talk between the respective discharge spaces G, thereby improving image quality including color purity. Also, the barrier ribs 24 provide an area on which the phosphor layers 25 are coated, thereby providing the luminance of the PDP. In addition to the above-described direct functions, the barrier ribs 24 partition the discharge spaces G to define unit pixels formed by R, G, and B discharge spaces G, and define a cell pitch between the discharge spaces G to determine the resolution of an image. Accordingly, the barrier ribs 24 are an essential component for improving image quality and luminous efficiency, and thus a variety of research has been conducted on barrier rib technology due to the recent demand for large-area high-resolution panels. Conventionally, barrier ribs may be manufactured using a screen printing method, a sandblasting method, an etching method, or a photolithographic method using photosensitive paste. However, it is difficult to form high-resolution barrier ribs using the above-described methods and productivity is low.

Document US2004/0070342 discloses a method of manufacturing a lower panel of a plasma display panel by filling a barrier rib-forming paste in a barrier ribs-forming intaglio, screen printing a dielectric layer-forming material on the surface of the intaglio and pressing the resultant composite body on a substrate provided in advance with an electrode pattern.

Document US2006/0043638 discloses a transfer assembly having a flat surface and a mold sheet with recesses filled with a slurry placed on the flat surface. The planar transfer assembly comprises a drive mechanism for rotating the planar transfer assembly of 180 degrees. The flat surface of the planar assembly freely pivots to align itself with a glass substrate so that the mold sheet is pressed on the substrate. The slurry is then cured and barrier ribs for a PDP are manufactured.

### SUMMARY OF THE INVENTION

The present invention provides a method of manufacturing a lower panel for a plasma display panel (PDP) of claim 1.

Also, the present invention provides a method of manufacturing a lower panel for a PDP in which an electrode burying layer with a uniform thickness can be formed.

Furthermore, the present invention provides a method of manufacturing a lower panel for a PDP, which can be easily performed and automated.

According to invention as defined in claim 1, there is provided a method of manufacturing a lower panel for a PDP using a manufacturing apparatus. The manufacturing apparatus includes: a table for filling disposed on a first side of the manufacturing apparatus, a table for compression disposed on a second side of the manufacturing apparatus, and a mold rotation driver for revolving forward and backward to transfer a mold for shaping barrier ribs mounted thereon in order to perform a subsequent process. The method includes: providing the mold having a patterned surface; disposing the mold on the table for filling disposed on the first side of the manufacturing apparatus and mounting the mold on the mold rotation driver; filling concave portions of the mold with a barrier rib material; disposing a dielectric sheet opposite the mold and compressing the dielectric sheet to be bonded to the mold; disposing a substrate having a plurality of electrodes on the table for compression disposed on the second side of the manufacturing apparatus; driving the mold rotation driver forward to transfer the mold to which the dielectric sheet is bonded onto the substrate disposed on the second side of the manufacturing apparatus; and compressing the dielectric sheet to be bonded to the substrate on which the electrodes are exposed. In the compressing and bonding of the dielectric sheet to the substrate, the dielectric sheet may bury the electrodes arranged on the substrate. The method may further comprise curing the barrier rib material contained in the mold after the compressing and bonding of the dielectric sheet to the substrate. The method, after the compressing and bonding of the dielectric sheet to the substrate, further comprise releasing the mold by driving the mold rotation driver backward; and loading the mold into a cleaning tank disposed on a moving path of the mold and cleaning the mold.

### BRIEF DESCRIPTION OF THE DRAWINGS

The above and other features and advantages of the present invention will become more apparent by describing in detail exemplary embodiments thereof with reference to the attached drawings in which:

FIG. 1 is an exploded perspective view of a conventional alternating current (AC) surface-discharge-type plasma display panel (PDP);

FIG. 2 is a process flowchart illustrating a method of manufacturing a lower panel for a PDP, according to an example;

FIGS. 3A through 3J are cross-sectional views illustrating the method of FIG. 2, according to an example;

FIG. 4 is a perspective view of a soft mold used for manufacturing barrier ribs, according to an example;

FIG. 5 is a perspective view taken along a line A-A' of FIG. 4, according to an example;

FIG. 6 is a schematic diagram of an apparatus used for manufacturing a lower panel according to an embodiment of the present invention; and

FIGS. 7A through 7J are cross-sectional views illustrating a method of manufacturing a lower panel using the apparatus shown in FIG. 6, according to an embodiment of the present invention.

### DETAILED DESCRIPTION OF THE INVENTION

Hereinafter, a method of manufacturing barrier ribs for a plasma display panel (PDP) and a lower panel will be described. A process of manufacturing the barrier ribs for the PDP will be described along with a process of manufacturing the lower panel since the two processes are performed consecutively.

### Example 1

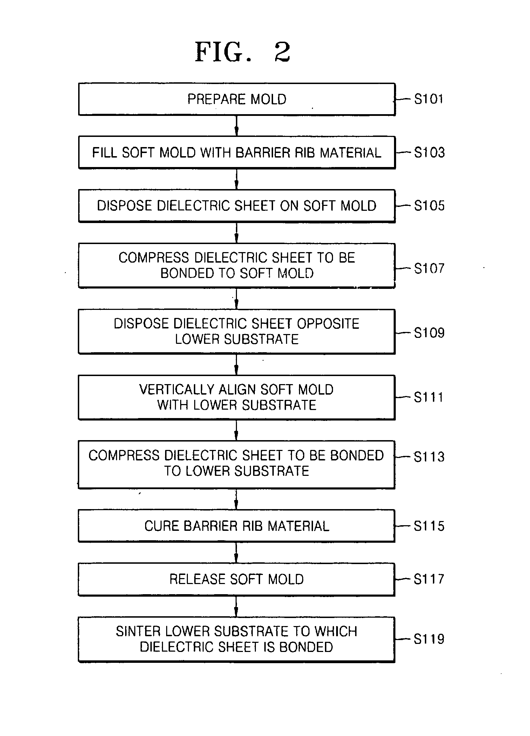

FIG. 2 is a process flowchart illustrating a method of manufacturing a lower panel for a PDP.

Initially, a soft mold for shaping barrier ribs is prepared in operation S101. In operation S103, a barrier rib material is filled in the prepared soft mold. In operation S 105, a dielectric sheet is disposed on the soft mold in which the barrier rib material is filled. In operation S107, a pressure is applied to the dielectric sheet so that the dielectric sheet is compressed and bonded to the soft mold. Next, the dielectric sheet, which is bonded to the soft mold, is disposed opposite a lower substrate for a PDP in operation S109, and aligned with the lower substrate in a vertical direction in operation S111. Thereafter, the dielectric sheet is compressed to the lower substrate in operation S113. The barrier rib material filled in the soft mold is cured in operation S115, and the soft mold is removed in operation S117. The resultant structure is sintered in operation S119, thereby completing the manufacture of the lower panel.

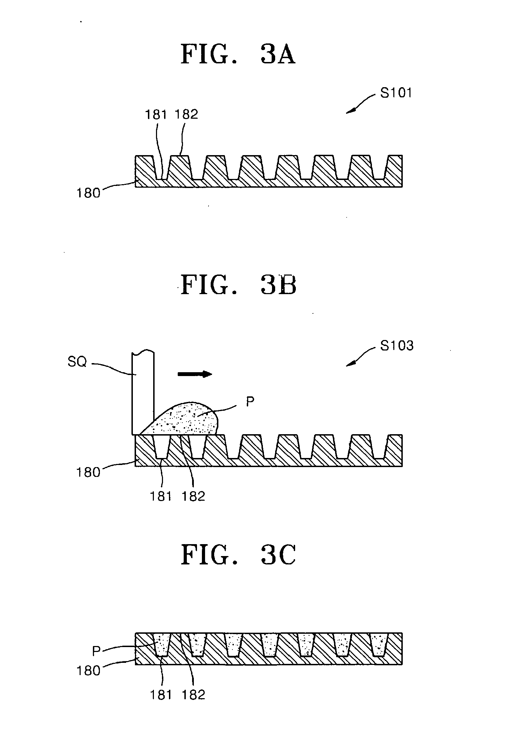

Hereinafter, operations S101 through S119 will be described in detail with reference to FIGS. 3A through 3J. FIGS. 3A through 3J are cross-sectional views illustrating the method of FIG. 2.

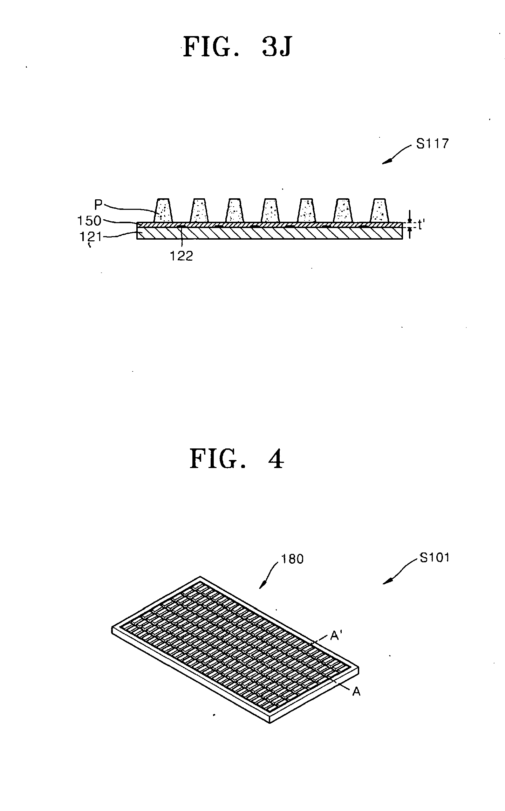

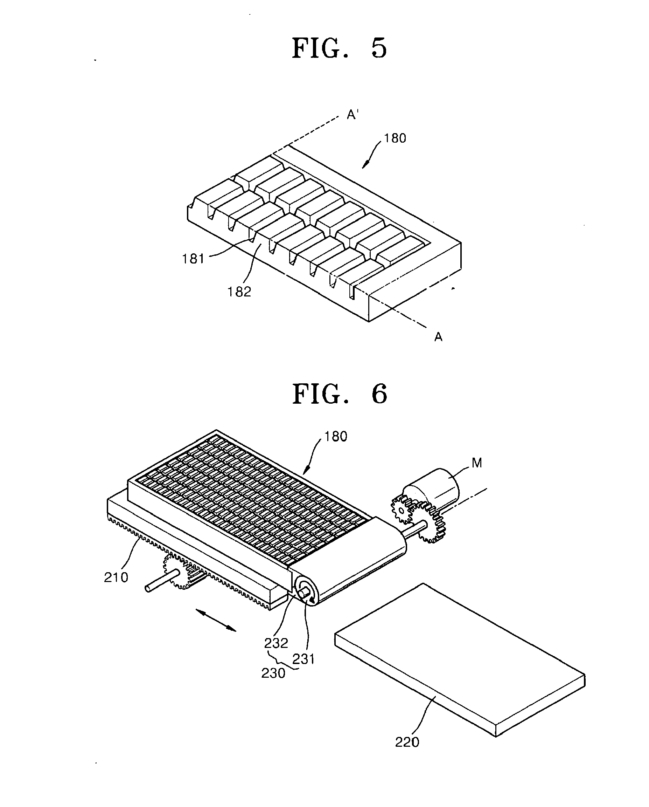

Referring to FIG. 3A, a soft mold 180 for shaping barrier ribs is prepared. The soft mold 180 includes concave portions 181 and convex portions 182 formed alternately along the length of the soft mold 180. For reference, FIG. 4 illustrates a perspective view of the soft mold 180, and FIG. 5 illustrates a perspective view taken along a line A-A' of FIG. 4.

The soft mold 180 may be formed of a flexible material, such as engineering plastic or silicon rubber. Since the soft mold 180 formed of the flexible material has lower surface energy than a hard mold formed of a hard material such as a metal, a metal oxide, or ceramic, the soft mold 180 has better release characteristics. Also, the soft mold 180 formed of the flexible material self-absorbs vibration or motion, which occurs during a release process, and does not apply load to the completed barrier rib pattern, and thus deformation of the barrier rib pattern can be structurally prevented. If necessary, the soft mold 180 may be formed of a material having high optical transparency so as to directly expose a barrier rib material filled in the concave portions 181 to irradiation light (UV light).

Referring to FIG. 3B, a barrier rib material P is filled in the concave portions 181 of the soft mold 180. More specifically, a sufficient amount of barrier rib material P is deposited on the soft mold 180, and a pressure is applied to the barrier rib material P by moving a squeegee SQ from one end of the soft mold 180 to the other end thereof, such that the barrier rib material P is filled in each of the concave portions 181 of the soft mold 180. Here, photosensitive paste may be used as the barrier rib material P. Also, the use of the squeegee SQ facilitates the process of filling the barrier rib material P in the respective concave portions 181 in exact quantities to a uniform height. After the concave portions 181 are filled with the barrier rib material P using the squeegee SQ, the soft mold 180 can have a nearly planar top surface as illustrated in FIG. 3C. The barrier rib material P filled in the soft mold 180 undergoes, for example, a curing process and constitutes barrier ribs defined by the concave portions 181. Meanwhile, as long as the concave portions 181 can be filled with a liquid or solid barrier rib material P, any known process of filling the concave portions 181 may be used. In this regard, the use of the squeegee SQ described above is only taken as an example.

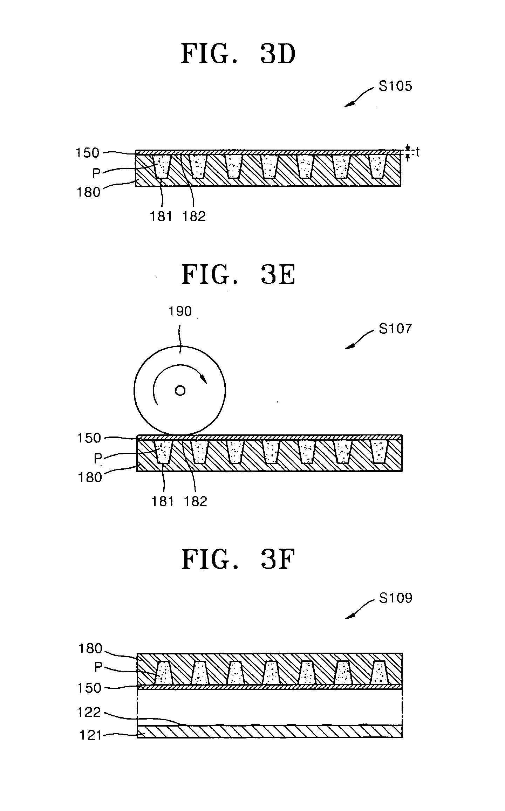

Referring to FIG. 3D, a dielectric sheet 150 is disposed on the soft mold 180. The dielectric sheet 150 is combined with the barrier rib material P contained in the concave portions 181 by the following process, structurally connects separate portions of the barrier rib material P, and functions as a dielectric material for burying electrodes. For this reason, the dielectric sheet 150 may be formed to a sufficient thickness "t" as to bury the electrodes and prevent the occurrence of electrical breakdown. The dielectric sheet 150 with a predetermined thickness "t" constitutes a dielectric material for burying electrodes. Thus, the thickness of the dielectric material can be controlled precisely and uniformly.

Referring to FIG. 3E, the dielectric sheet 150 is compressed and bonded to the soft mold 180 using a pressure roller 190. In this case, the pressure roller 190 for applying a predetermined pressure is moved on the dielectric sheet 150 from one end of the dielectric sheet 150 to the other end thereof, so that the dielectric sheet 150 is bonded to the soft mold 180, compressed and shaped to a relatively small uniform thickness, and can have a flattened top surface. By using the pressure roller 190, the dielectric sheet 150 can be closely adhered to the barrier rib material P filled in the soft mold 180. Furthermore, the barrier rib material P remaining on the convex portions 182 of the soft mold 180 may be pushed out by the pressure roller 190, and externally discharged through an open end portion.

After the above-described compression process is performed, the dielectric sheet 150 bonded to the soft mold 180 is turned upside down and disposed over a lower substrate 121 for a PDP as illustrated in FIG. 3F. More specifically, the lower substrate 121, such as a glass substrate or a plastic flexible substrate, is prepared and a plurality of electrodes 122 are disposed on the lower substrate 121 parallel to one another. Thereafter, the dielectric sheet 150 is disposed opposite the electrodes 122, so that the soft mold 180 may be located uppermost in the resultant structure.

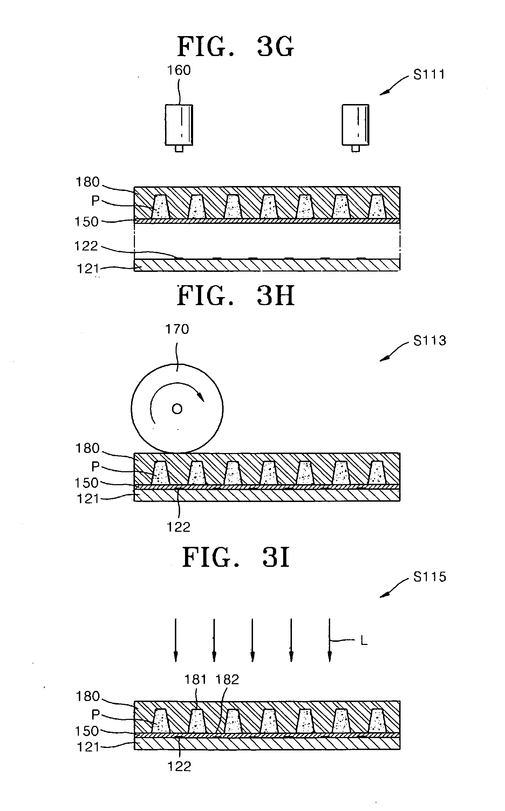

Referring to FIG. 3G, the soft mold 180 is vertically aligned with the electrodes 122 disposed on the lower substrate 121. In order to perform the alignment process, alignment marks (not shown) may be formed in the soft mold 180 and the lower substrate 121, respectively. The alignment marks may be recognized by a charge-coupled device (CCD) 160 at the same time to determine an alignment state between the soft mold 180 and the lower substrate 121, so a misalignment can be corrected based on image data photographed by the CCD 160. In this case, the misalignment may be simply corrected by moving the soft mold 180. For example, since it is necessary to dispose the electrodes 122 between barrier ribs (or adjacent portions of the barrier rib material P) in order to perform exact addressing operations, the above-described alignment process is carried out during the manufacture of the lower panel for the PDP.

Referring to FIG. 3H, the dielectric sheet 150 is compressed and bonded to the lower substrate 121 by applying a pressure to the top surface of the soft mold 180. More specifically, by applying a predetermined pressure to the top surface of the soft mold 180 using a pressure unit 170, the underlying dielectric sheet 150 is compressed and bonded to the lower substrate 121 so that the electrodes 122 are buried by the dielectric sheet 150. The pressure unit 170 may be, for example, a pressure roller that is applied with a predetermined pressure to the top surface of the soft mold 180 and rotated from one end of the soft mold 180 to the other end thereof. The dielectric sheet 150 functions as a conventional dielectric layer that electrically insulates the electrodes 122 from each other and protects the electrodes 122 from a discharge environment. Therefore, the dielectric sheet 150 is not separated from sides of the electrodes 122 and can completely bury the electrodes 122.

Referring to FIG. 3I, when the dielectric sheet 150 is sufficiently bonded to the lower substrate 121, a process of curing the barrier rib material P may be performed. The curing process may be performed only when the barrier rib material P is curable, and thus the barrier rib material is cured in a solid phase and has a variable developing property under the influence of heating, exposure, and other factors. For example, when photosensitive paste is used as the barrier rib material P, UV light L is irradiated to the barrier rib material P filled in the concave portions 181 of the soft mold 180. The barrier rib material P, which is exposed to the UV light L through the transparent soft mold 180, is cured in a solid phase due to an internal photochemical reaction. During the UV-curing process, the barrier rib material P is integrally combined with the dielectric sheet 150. The portion of the barrier rib material P cured in each of the concave portions 181 constitutes a unit barrier rib having a shape corresponding to the concave portion 181, and adjacent unit barrier ribs are structurally connected to one another by the dielectric sheet 150.

Referring to FIG. 3J, the soft mold 180 is released from the dielectric sheet 150 and removed. When the soft mold 180 is removed, a dielectric barrier rib (hereinafter, a barrier rib layer) is formed. The barrier rib layer functions as a dielectric layer that buries the electrodes 122 using the dielectric sheet 150 and also, partitions discharge spaces using the barrier rib material P. Since the dielectric sheet 150 used for burying the electrodes 122 is formed of a sheet material with a constant thickness, it can have a uniform thickness without additional quality control (QC) or an additional process. Also, the dielectric sheet 150 is compressed and bonded to the lower substrate 121 instead of a conventional coating method, so that the dielectric sheet 150 can have a planar top surface instead of a curved top surface due to the shape of the electrodes 122. Meanwhile, according to an embodiment of the present invention, because the barrier rib layer can function as both the dielectric layer for burying the electrodes 122 and the barrier ribs for partitioning the discharge spaces, the number of process operations can be reduced, compared with a conventional method in which a dielectric layer and barrier ribs are formed using separate processes.

Meanwhile, the lower panel from which the soft mold 180 is removed may be sintered at an appropriate temperature, for example, at a temperature of about 500 °C or higher. As a result, the barrier rib material P bonded to the dielectric sheet 150 is cured, and adhesion of the dielectric sheet 180 to the lower substrate 121 can be reinforced.

The dielectric sheet 150, which is integrally formed with the barrier rib layer, directly buries the electrodes 122 on the lower substrate 121. However, and an additional dielectric layer for burying the electrodes 122 can be formed on the lower substrate 121. The additional dielectric layer may be interposed between the electrodes 122 disposed on the lower substrate 121 and the dielectric sheet 150.

### Embodiment 1

Hereinafter, a method of manufacturing a lower panel for a PDP according to an embodiment of the present invention will be described. The current embodiment is generally similar to the previous example in terms of technical principles, differs from the previous example in that a panel manufacturing apparatus is used to easily perform and automate the method. FIG. 6 is a schematic diagram of an apparatus used for manufacturing a lower panel, according to an embodiment of the present invention. Referring to FIG. 6, the apparatus according to the current embodiment of the present invention includes a moving table 210 for filling, which is disposed on one side of the apparatus to provide a support surface during the filling of a barrier rib material, and a fixed table 220 for compression, which is disposed on the other side of the apparatus to provide a support surface during compression and bonding of a dielectric sheet to a substrate. Also, a mold rotation driver 230 is interposed between the moving table 210 and the fixed table 220. The rotation driver 230 fixes a soft mold 180 to one end thereof and revolves in order to transfer the soft mold 180 from the moving table 210 for filling to the fixed table 220 for compression in order to perform a subsequent process. The mold rotation driver 230 includes a rotation axis, which is connected to a driving motor M, which is a power source, and rotates clockwise or counterclockwise, and a mold combination member 232, which is combined with the soft mold 180 and rotates along with the rotation axis 231. For example, the mold combination member 232 may be an elastically biased clip member, which can elastically fix the soft mold 180 therein. Also, the mold combination member 232 may further include a screw (not shown) for fixing an end portion of the soft mold 180 in order to reinforce the combination of the mold combination member 232 with the soft mold 180. As an alternative to the screw, grooves (not shown) may be formed in both top and bottom surfaces of the end portion of the soft mold 180 in one direction, and protrusions (not shown) having a shape conformable to the grooves may be formed on the mold combination member 232 that is prepared as a clip type, so that the mold combination member 232 can be slidingly combined with the soft mold 180.

After the corresponding process is finished, the mold rotation driver 230 is intermittently rotated by a predetermined angle in order to transfer the soft mold 180 to a position where a subsequent process will be performed. In this case, the moving table 210 for filling may be installed to be capable of moving along a fixed path such that it can be shunted from a moving path of the soft mold 180 that revolves to draw an arc. Due to the shunt operation of the moving table 210 for filling, the revolution of the mold rotation driver 230 departs from structural restrictions and the degree of freedom of the mold rotation driver 230 is increased. Meanwhile, in a variation of the current embodiment of the present invention, the fixed table 220 for compression may be installed to be capable of moving instead of or along with the moving table 210 for filling.

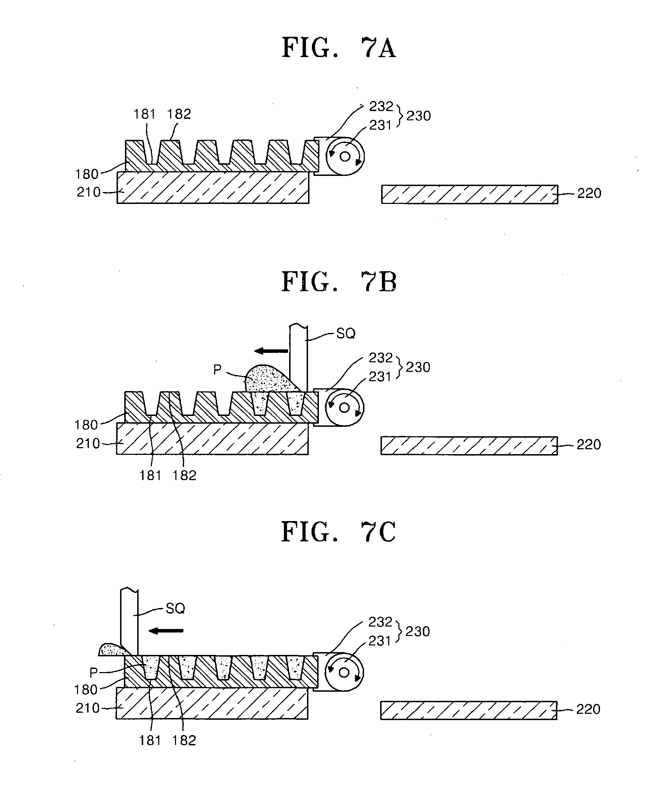

Hereinafter, the method of manufacturing a lower panel for a PDP according to the current embodiment of the present invention will be described with reference to FIGS. 7A through 7J. FIGS. 7A through 7J are cross-sectional views illustrating the method of manufacturing a lower panel for a PDP using the apparatus shown in FIG. 6, according to the current embodiment of the present invention Referring to FIG. 7A, a soft mold 180 having a mold pattern including regularly alternating concave portions 181 and convex portions 182 is prepared. Next, the prepared soft mold 180 is located on the moving table 210 for filling, and an end portion of the soft mold 180 is combined with the mold rotation driver 230. For example, the end portion of the soft mold 180 may be forcibly inserted into or slidingly fixed to the combination member 232 of the mold rotation driver 230. After the soft mold 180 is completely set, the concave portions 181 of the soft mold 180 are filled with a barrier rib material P as illustrated in FIGS. 7B and 7C. Specifically, the barrier rib material P is deposited on the soft mold 180 and moved by applying a pressure using a squeegee SQ so that each of the concave portions 181 of the soft mold 180 can be filled with the barrier rib material P.

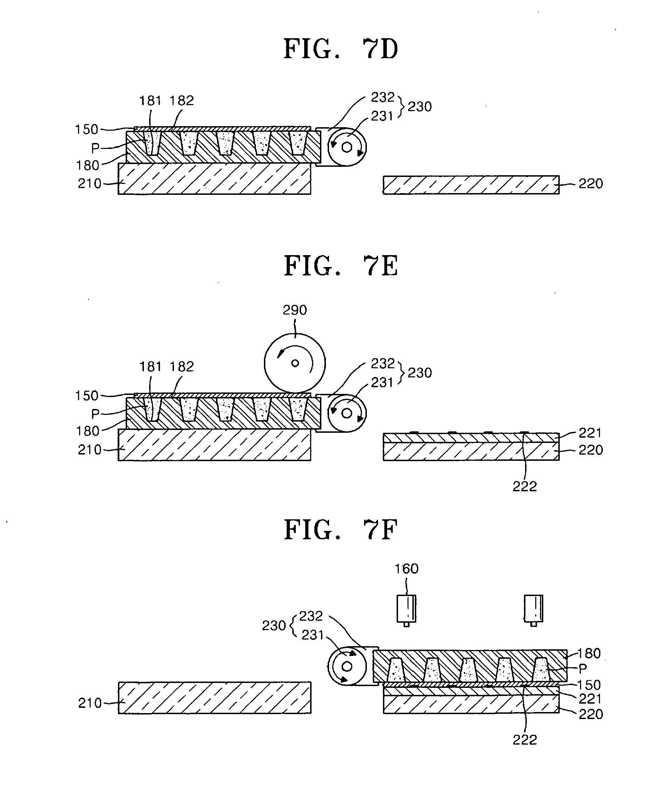

Referring to FIG. 7D, a dielectric sheet 150 having a predetermined thickness is disposed on the soft mold 180. According to an embodiment of the present invention, the dielectric sheet 150 with a predetermined thickness constitutes a dielectric material for burying electrodes. Thus, the thickness of the dielectric material can be controlled precisely and uniformly.

Referring to FIG. 7E, the dielectric sheet 150 is compressed and bonded to the soft mold 180 using a pressure roller 290. Specifically, the pressure roller 290 is applied with pressure to the top surface of the dielectric sheet 150 and rotated from one end of the dielectric sheet 150 to the other end thereof, so that the dielectric sheet 150 is compressed to the soft mold 180. Thus, the dielectric sheet 150 may be shaped to a uniform thickness, form a pressure junction with the convex portions 182, and be closely adhered to the barrier rib material P filled in the concave portions 181. In this case, while the dielectric sheet 150 is being closely adhered to the convex portions 182, the barrier rib material P remaining on the convex portions 182 may be pushed out by the pressure roller 290 in one direction and externally discharged.

After or during the above-described compression process, a lower substrate 221 for a PDP is previously disposed on the fixed table 220 for compression where subsequent processes will be performed. In this case, the lower substrate 221 may be a glass substrate or a plastic flexible substrate, and a plurality of electrodes 222 are disposed on the lower substrate 221.

Referring to FIG. 7F, after preparing the lower substrate 221 having the electrodes 222, the mold rotation driver 230 is driven so that the soft mold 180 is transferred from the moving table 210 for filling to the fixed table 220 for compression. For instance, by revolving the mold rotation driver 230 clockwise by an angle of about 180°, the position of the soft mold 180 may be transferred from one side to the other side. Then, the dielectric sheet 150 bonded to the soft mold 180 is turned upside down, so that the soft mold 180 is located on the dielectric sheet 150, and the dielectric sheet 150 is disposed opposite the exposed electrodes 222 disposed on the lower substrate 221.

Thereafter, the soft mold 180 is vertically aligned with the electrodes 222 disposed on the lower substrate 221. In order to perform the alignment process, alignment marks (not shown) may be formed in the soft mold 180 and the lower substrate 221, respectively. The alignment marks may be recognized by a CCD 160 at the same time to determine an alignment state between the soft mold 180 and the lower substrate 221, so a misalignment can be corrected based on image data photographed by the CCD 160. In this case, the misalignment may be simply corrected by moving the lower substrate 221, since it is easier to move the lower substrate 221 than the soft mold 180. For example, since it is necessary to dispose the electrodes 122 between barrier ribs (or adjacent portions of the barrier rib material P) in order to perform exact addressing operations, the above-described alignment process is carried out during the manufacture of the lower panel for the PDP.

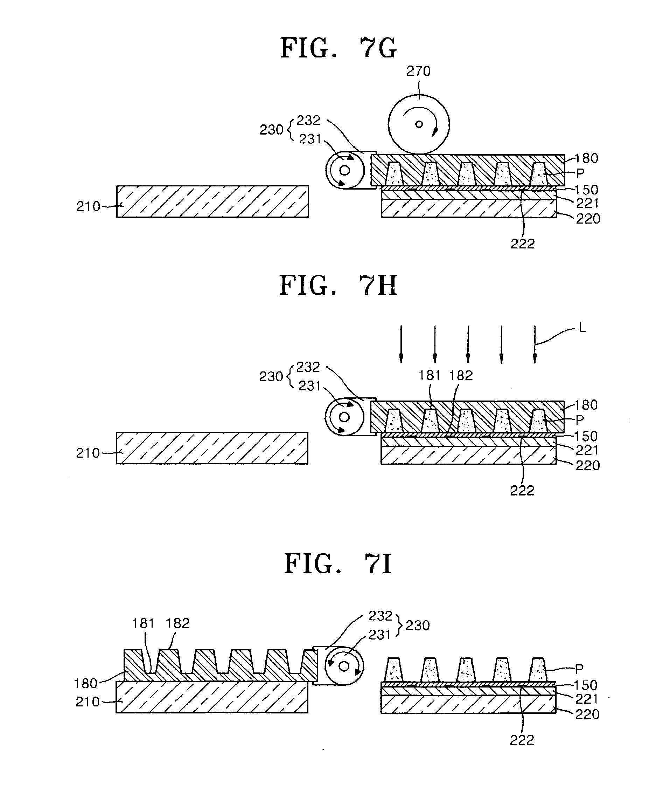

Referring to FIG. 7G, the dielectric sheet 150 is compressed and bonded to the lower substrate 221 by applying a pressure to a reverse surface of the soft mold 180 using a pressure unit 270. Thus, the underlying dielectric sheet 150 is compressed and bonded to the lower substrate 221 so that the electrodes 222 are buried by the dielectric sheet 150. The pressure unit 270 may be, for example, a pressure roller that is rotated from one end of the soft mold 180 to the other end thereof and applies a predetermined pressure to the soft mold 180. The dielectric sheet 150 functions as a conventional dielectric layer that electrically insulates the electrodes 222 from each other and protects the electrodes 222 from a discharge environment. Therefore, it is necessary to prepare the dielectric sheet 150 with a sufficient thickness to enable close adhesion of the dielectric sheet 150 to the surfaces of the electrodes 222, and apply a sufficient pressure to the dielectric sheet 150.

When the dielectric sheet 110 is sufficiently bonded to the lower substrate 120, a process of curing the barrier rib material P may be performed as illustrated in FIG. 7H. The curing process operation may be performed only when using a curable barrier rib material P, which has a variable developing property according to temperature conditions and a light exposure state. For example, when photosensitive paste is used as the barrier rib material P, UV light L is irradiated to the barrier rib material P contained in the soft mold 180, so that the barrier rib material P is cured and integrally combined with the dielectric sheet 150. The cured barrier rib material P constitutes a barrier rib having a shape corresponding to the concave portion 181 of the soft mold 180, and adjacent barrier ribs are structurally connected to one another by the dielectric sheet 150.

Referring to FIG. 7I, the soft mold 180 is released from the dielectric sheet 150 by driving the mold rotation driver 230. The released soft mold 180 is transferred onto the moving table 210 for filling with the revolution of the mold rotation driver 230, and the lower panel for the PDP remains on the fixed table 220 for compression. The lower panel for the PDP includes a barrier rib layer, which is formed by integrally combining the barrier rib material P and the dielectric sheet 150, and the lower substrate 221 to which the barrier rib layer is bonded. The barrier rib layer functions as a dielectric layer that buries the electrodes 122 using the dielectric sheet 150 and also, partitions discharge spaces using the barrier rib material P.

Furthermore, the lower panel for the PDP may be sintered at an appropriate temperature, for example, at a temperature of about 500 °C or higher. As a result, the barrier rib material P bonded to the dielectric sheet 150 can be stably shaped, and adhesion of the dielectric sheet 180 to the lower substrate 221 can be reinforced.

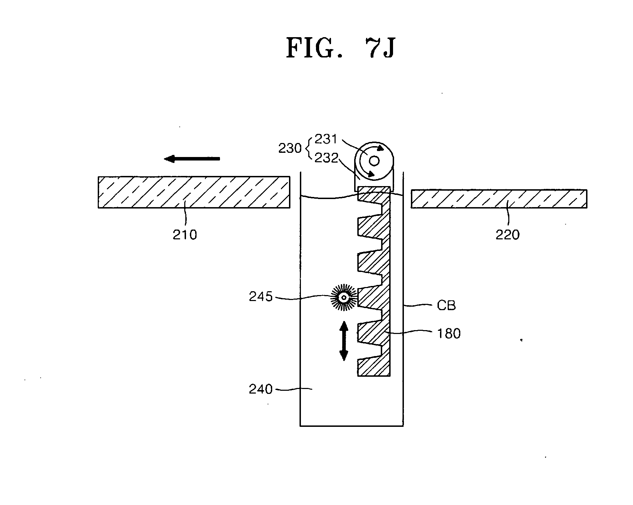

Meanwhile, a process cycle including a series of process operations that have been described above with reference to FIGS. 7A through 7I may be repetitively performed to produce the lower panel for the PDP in large quantities. In this case, the soft mold 180, which is repetitively reused within its own lifetime, may undergo a cleaning process as illustrated in FIG. 7J after a process cycle is completed and before the next cycle begins. Since residue (e.g., the barrier rib material P) attached to the soft mold 180 may affect the shape of barrier ribs that will be manufactured during the next cycle, a cleaning process is required as follows. That is, by driving the mold rotation driver 230, the soft mold 180 disposed on the moving table 210 for filling is loaded into a cleaning tank CB disposed below the mold rotation driver 230. In this case, referring to FIG. 7J, the moving table 210 for filling may be shunted to the left so as not to obstruct the revolution of the soft mold 180. The cleaning tank CB includes a cleaning solution 240 containing a solvent for dissolving the barrier rib material P. The cleaning tank CB may further include an ultrasonic oscillator for ultrasonically oscillating the cleaning solution 240. Thus, the residue attached to the soft mold 180 may be rapidly removed due to frictional oscillation between the soft mold 180 and the cleaning solution 240. Also, a cleaning roller 245, which rotates and moves up and down at the same time and includes a brush attached to an outer circumferential surface thereof, may be installed in the cleaning tank CB. The cleaning roller 245 can facilitate the removal of the residue from the soft mold 180. The cleaned soft mold 180 is transferred onto the moving table 210 for filling again due to the revolution of the mold rotation driver 230 and waits for the next manufacturing cycle.

Although it is exemplarily described that the barrier ribs and the lower panel for the PDP are manufactured using the soft mold, the present invention is not limited thereto and a hard mold, for example, may be used instead of the soft mold.

In the method of manufacturing the lower panel for the PDP according to the present invention, a barrier rib pattern is formed using a molding process, so that barrier ribs having a desired shape can be precisely formed without shape limitation only if manufacturing a mold is possible.

In particular, since the dielectric sheet with a uniform thickness is used as a dielectric layer for burying electrodes, the thickness of the dielectric layer can be controlled easily and uniformly.

Furthermore, the present invention as defined in claim 1 provides an apparatus for manufacturing the lower panel for the PDP so that the technical principle of the present invention can be embodied in an automation or semi-automation system, thereby greatly enhancing process simplicity and productivity and accelerating the shift to mass production of PDPs using automated equipment.

## Claims

1. A method of manufacturing a lower panel for a plasma display panel using a manufacturing apparatus comprising a table for filling (210) disposed on a first side of the manufacturing apparatus, a table for compression (220) disposed an a second side of the manufacturing apparatus, and a mold rotation driver (230) for revolving forward and backward to transfer a mold (180) for shaping barrier ribs mounted thereon in order to perform a subsequent process, the method comprising:
providing the mold (180) having a patterned surface;
disposing the mold (180) on the table for filling (210) disposed on the first side of the manufacturing apparatus and mounting the mold (180) on the mold rotation driver (230);
filling concave portions (181) of the mold (180) with a barrier rib material (P);
disposing a dielectric sheet (150) opposite the mold (180) and compressing the dielectric sheet (150) to be bonded to the mold (180);
disposing a substrate (221) having a plurality of electrodes (222) on the table for compression (220) disposed on the second side of the manufacturing apparatus;
driving the mold rotation driver (230) forward to transfer the mold (180) to which the dielectric sheet (150) is bonded onto the substrate (221) disposed on the second side of the manufacturing apparatus;
compressing the dielectric sheet (150) to be bonded to the substrate (221) on which the electrodes (222) are exposed;
releasing the mold (180) by driving the mold rotation driver (230) backward;
and
loading the mold (180) into a cleaning tank disposed on a moving path of the mold (180) and cleaning the mold (180).

2. The method of claim 1, wherein the mold (180) is a flexible soft mold.

3. The method of claim 1 or 2, wherein the filling of the concave portions (181) with the barrier rib material (P) is performed by applying a pressure using a squeegee (SQ).

4. The method of one of the preceding claims, wherein the barrier rib material (P) comprises photosensitive paste.

5. The method of one of the preceding claims, further comprising curing the barrier rib material (P) filled in the mold (180) after the compressing and bonding of the dielectric sheet (150) to the mold (180).

6. The method of one of the preceding claims, after the compressing and bonding of the dielectric sheet (150) to the mold (180), further comprising:
releasing the mold (180); and
sintering the dielectric sheet (150) on which the barrier rib material (P) is patterned.

7. The method of one of the preceding claims, further comprising vertically aligning the mold (180) to which the dielectric sheet (150) is bonded with the electrodes (222) disposed on the substrate (221).

8. The method of one of the preceding claims, wherein, in the compressing and bonding of the dielectric sheet (150) to the substrate (221), the dielectric sheet (150) buries the electrodes arranged on the substrate (221).

9. The method of one of the preceding claims, further comprising curing the barrier rib material (P) contained in the mold (180) after the compressing and bonding of the dielectric sheet (150) to the substrate (221).

10. The method of one of the preceding claims, after the compressing and bonding of the dielectric sheet (150) to the substrate (221), further comprising:
releasing the mold (180); and
sintering the substrate (150) to which the dielectric sheet (150) is bonded.

## Patentansprüche

1. Verfahren zur Herstellung einer unteren Platte einer Plasmaanzeigetafel durch Verwendung einer Herstellungsvorrichtung, umfassend eine auf einer ersten Seite der Herstellungsvorrichtung angeordnete Auflage für die Befüllung (210), eine auf einer zweiten Seite der Herstellungsvorrichtung angeordnete Auflage für die Kompression (220) sowie einen Formenrotationsantrieb (230) zum Vor- und Zurückdrehen, um eine darauf angebrachte Form (180) zum Ausformen von Sperrrippen zur Durchführung eines sich anschließenden Vorgangs weiterzugeben, wobei das Verfahren umfasst:
Bereitstellen der Form (180) mit einer strukturierten Oberfläche;
Anordnen der Form (180) auf der auf der ersten Seite der Herstellungsvorrichtung angeordneten Auflage für die Befüllung (210) und Anbringen der Form (180) auf dem Formenrotationsantrieb (230);
Befüllen konkaver Bereiche (181) der Form (180) mit einem Sperrrippenmaterial (P); Anordnen einer dielektrischen Platte (150) gegenüber der Form (180) und Zusammendrücken der dielektrischen Platte (150) zur Verbindung mit der Form (180);
Anordnen eines Substrats (221) mit einer Vielzahl von Elektroden (222) auf der auf der zweiten Seite der Herstellungsvorrichtung angeordneten Auflage für die Kompression (220);
Antreiben des Formenrotationsantriebs (230) nach vorn, um die Form (180), mit welcher die dielektrische Platte (150) verbunden ist, auf das auf der zweiten Seite der Herstellungsvorrichtung angeordnete Substrat (221) zu übergeben;
Zusammendrücken der dielektrischen Platte (150) zur Verbindung mit dem Substrat (221), auf dem die Elektroden (222) freiliegen;
Lösen der Form (180) durch Antreiben des Formenrotationsantriebs nach hinten;
und
Einbringen der Form (180) in einen in einem Bewegungspfad der Form (180) angeordneten Reinigungsbehälter und Reinigen der Form (180).

2. Verfahren nach Anspruch 1, wobei die Form (180) eine elastische weiche Form ist.

3. Verfahren nach Anspruch 1 oder 2, wobei das Befüllen der konkaven Bereiche (181) mit dem Sperrrippenmaterial (P) durch Druckbeaufschlagung mittels Verwendung eines Abstreifers (SQ) durchgeführt wird.

4. Verfahren nach einem der vorangegangenen Ansprüche, wobei das Sperrrippenmaterial (P) eine lichtempfindliche Paste umfasst.

5. Verfahren nach einem der vorangegangenen Ansprüche, weiterhin umfassend das Aushärten des in die Form (180) gefüllten Sperrrippenmaterials (P) nach dem Zusammendrücken und Verbinden der dielektrischen Platte (150) mit der Form (180).

6. Verfahren nach einem der vorangegangenen Ansprüche, nach dem Zusammendrücken und Verbinden der dielektrischen Platte (150) mit der Form (180) weiterhin umfassend:
Lösen der Form (180); und
Sintern der dielektrischen Platte (150), auf der das Sperrrippenmaterial (P) strukturiert vorliegt.

7. Verfahren nach einem der vorangegangenen Ansprüche, weiterhin umfassend das vertikale Ausrichten der Form (180), mit welcher die dielektrische Platte (150) verbunden ist, mit den auf dem Substrat (221) angeordneten Elektroden (222).

8. Verfahren nach einem der vorangegangenen Ansprüche, wobei beim Zusammendrücken und Verbinden der dielektrischen Platte (150) mit dem Substrat (221) die dielektrische Platte (150) die auf dem Substrat (221) angeordneten Elektroden vergräbt.

9. Verfahren nach einem der vorangegangenen Ansprüche, weiterhin umfassend das Aushärten des in der Form (180) enthaltenen Sperrrippenmaterials (P) nach dem Zusammendrücken und Verbinden der dielektrischen Platte (150) mit dem Substrat (221).

10. Verfahren nach einem der vorangegangenen Ansprüche, nach dem Zusammendrücken und Verbinden der dielektrischen Platte (150) mit dem Substrat (221) weiterhin umfassend:
Lösen der Form (180); und
Sintern des Substrats (221), mit dem die dielektrische Platte (150) verbunden ist.

## Revendications

1. Procédé de fabrication d'un panneau inférieur pour un panneau d'affichage à plasma à l'aide d'un appareil de fabrication comprenant une table pour le remplissage (210) disposée sur un premier côté de l'appareil de fabrication, une table pour la compression (220) disposée sur un deuxième côté de l'appareil de fabrication, et un dispositif d'entraînement en rotation de moule (230) pour la rotation vers l'avant et vers l'arrière de façon à transférer un moule (180) pour former des nervures de barrière monté sur celui-ci afin d'effectuer un processus ultérieur, le procédé comprenant :
la réalisation du moule (180) comportant une surface à motifs ;
la disposition du moule (180) sur la table pour le remplissage (210) disposée sur le premier côté de l'appareil de fabrication et le montage du moule (180) sur le dispositif d'entraînement en rotation de moule (230) ;
le remplissage de parties concaves (181) du moule (180) avec un matériau de nervures de barrière (P) ;
la disposition d'une feuille diélectrique (150) à l'opposé du moule (180) et la compression de la feuille diélectrique (150) devant être fixée au moule (180) ;
la disposition d'un substrat (221) comportant une pluralité d'électrodes (222) sur la table pour la compression (220) disposée sur le deuxième côté de l'appareil de fabrication ;
l'entraînement du dispositif d'entraînement en rotation de moule (230) vers l'avant de façon à transférer le moule (180) sur lequel est fixée la feuille diélectrique (150) sur le substrat (221) disposé sur le deuxième côté de l'appareil de fabrication ;
la compression de la feuille diélectrique (150) devant être fixée au substrat (221) sur lequel sont exposées les électrodes (222) ;
la libération du moule (180) par entraînement du dispositif d'entraînement en rotation de moule (230) vers l'arrière ; et
le chargement du moule (180) dans un réservoir de nettoyage disposé sur un trajet de déplacement du moule (180) et le nettoyage du moule (180).

2. Procédé selon la revendication 1, dans lequel le moule (180) est un moule mou et souple.

3. Procédé selon la revendication 1 ou 2, dans lequel le remplissage des parties concaves (181) par le matériau de nervures de barrière (P) est effectué par application d'une pression à l'aide d'une raclette (SQ).

4. Procédé selon l'une des revendications précédentes, dans lequel le matériau de nervures de barrière (P) comprend une pâte photosensible.

5. Procédé selon l'une des revendications précédentes, comprenant de plus le durcissement du matériau de nervures de barrière (P) remplissant le moule (180) après la compression et la fixation de la feuille diélectrique (150) sur le moule (180).

6. Procédé selon l'une des revendications précédentes, après la compression et la fixation de la feuille diélectrique (150) sur le moule (180), comprenant de plus :
la libération du moule (180) ; et
le frittage de la feuille diélectrique (150) sur laquelle il est réalisé des motifs du matériau de nervures de barrière (P).

7. Procédé selon l'une des revendications précédentes, comprenant de plus l'alignement vertical du moule (180) sur lequel est fixée la feuille diélectrique (150) avec les électrodes (222) disposées sur le substrat (221).

8. Procédé selon l'une des revendications précédentes, dans lequel, lors de la compression et de la fixation de la feuille diélectrique (150) sur le substrat (221), la feuille diélectrique (150) enfouit les électrodes disposées sur le substrat (221).

9. Procédé selon l'une des revendications précédentes, comprenant de plus le durcissement du matériau de nervures de barrière (P) contenu dans le moule (180) après la compression et la fixation de la feuille diélectrique (150) au substrat (221).

10. Procédé selon l'une des revendications précédentes, après la compression et la fixation de la feuille diélectrique (150) au substrat (221), comprenant de plus :
la libération du moule (180) ; et
le frittage du substrat (150) sur lequel est fixée la feuille diélectrique (150).
